# EUROPEAN PATENT APPLICATION

(11) **EP 2 275 337 A1**
(43) Date of publication of application: **19.01.2011**
(21) Application number: 09251829.9
(22) Date of filing: 17.07.2009
(51) Int. Cl.: B62M 1/00, B62M 1/12

(54) **Bidirectional different speed ratio driving device with bidirectional manpower input**

(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

The present invention discloses a foot-pedaling device with a particular bidirectional pedaling for constantly driving the loading wheel train in the same direction, wherein the pedaling direction is selected by the riding pedaler according to the operating status of his/her muscles and joints, or it is further through the different driving directional input to provide the same directional different speed change ratio output.

## Description

### BACKGROUND OF THE INVENTION

### (a) Field of the invention

The present invention discloses that the input end of the manpower input device is driven by both or one of the human hand or foot in the bidirectional positive or reverse rotating direction, and it is through the output end of the manpower input device to operate the bidirectional different speed ratio output via the bidirectional different speed ratio speed change device for driving the loading wheel train, wherein the present invention is applied in foot pedal or hand swing vehicles, or both or one of the bidirectional rotating foot pedal and hand swing manual driven vehicles, or applied in the foot pedal or hand swing sports devices, or both or one of the bidirectional rotating foot pedal or hand swing manual driven sports devices, or applied in both or one of the foot pedal or hand swing driven devices such as fluid pump, or fan or power generator.

### (b) Description of the Prior Art

We all know that constant directional foot pedaling requires the periodic and constant use of relevant muscles and joints, i.e. partial muscles and joints of the pedaler's limbs are constantly under force application and stressing conditions, while the other part of muscles and joints are constantly under no force application or non-stressing conditions, therefore, as a whole, the bearing of the human body is uneven to easily get tired and cause sports injuries.

### SUMMARY OF THE INVENTION

The present invention disclosed that the output end of the bidirectional manpower input device being particularly used to provide bidirectional rotating input is transmitted to the input end of the bidirectional different speed ratio speed change device, and is through the output end of the bidirectional different speed ratio speed change device to provide the bidirectional different speed ratio output for driving the loading wheel train, wherein the user can freely decide the driving input direction to allow the bidirectional different speed ratio speed change device to provide the constant rotating directional output at different speed change ratio while in different driving input direction.

The present invention is especially applying as an upright bidirectional pedaling bicycle or as an upright bidirectional pedaling device for lower limbs bidirectional pedaling in order to widen the use of muscles and change the muscle strength and density, and obtain the following advantages:
(1) reducing injuries caused by overuse of partial muscles and joints;
(2) working the muscles and joints seldom being used or trained;

Above advantages can be applied at various bidirectional manpower driving using different muscle groups; especially when apply bidirectional pedaling driving at upright bicycles or upright pedaling exercise devices, the difference of the muscle groups using for bidirectional pedaling is bigger, that makes the said advantages and their effects more obvious. (Please refer to the analysis and description of attachment.)

### BRIEF DESCRIPTION OF THE DRAWINGS

Fig. 1 is a block schematic view of basic structure of the bidirectional different speed ratio driving device with bidirectional manpower input of the present invention.
Fig. 2 is a block schematic view showing the driving device application example of Fig 1, wherein a transmission device(104) is additionally installed between the bidirectional manpower input device(101) and the bidirectional different speed ratio speed change device(102).
Fig. 3 is a block schematic view showing the driving device application example of Fig 1, wherein a transmission device(104) is additionally installed between the bidirectional different speed ratio speed change device(102) and the driven loading wheel train(103).
Fig. 4 is a block schematic view showing the driving device application example of Fig 1, wherein a transmission device(104) is respectively additionally installed between the bidirectional manpower input device(101) and the bidirectional different speed ratio speed change device(102) as well as between the bidirectional different speed ratio speed change device(102) and the driven loading wheel train(103).
Fig. 5 is a block schematic view of the application example showing that the present invention is applied in the manpower driven sports device having the fixed damped loading wheel train.
Fig. 6 is a block schematic view of the application example showing that the present invention is applied in the manpower bidirectional driven sports device having the operatively controllable damped loading wheel train.
Fig. 7 is a block schematic view of the application example showing that the present invention is applied in the manpower driven carriers by additionally installing the fixed damping device to produce damping thereby constituting the sports device function.
Fig. 8 is a block schematic view of the application example showing that the present invention is applied in the manpower driven carriers by installing the externally added operatively controllable damping device(105) to constitute the sports device function.
Fig. 9 is a block schematic view of the application example showing that rotating type mechanical functioning device with bidirectional different speed change ratio is driven by the present invention.
Fig. 10 is a block schematic view of the present invention showing the application example using for driving the power generator.
Fig. 11 is a block schematic view of the application example showing that the loading wheel train(103) and the power generator set(109) driven by the present invention are combined in an integral structure.
Fig. 12 is block schematic view of the application example showing that the loading wheel train(103) of the manpower driven carrier of the present invention is equipped with a power generator set(109).

### DESCRIPTION OF MAIN COMPONENT SYMBOLS

101: Bidirectional manpower input device
102: Bidirectional different speed ratio speed change device
103: Loading wheel train
104, 200: Transmission device
105: Externally added operatively controllable damping device
106: Damped loading wheel train
107: Operatively controllable damped loading wheel train
108: Rotating type mechanical functioning device
109: Power generator set
110: Operative control device relative to power generator
111: Circuit switch and protecting device
112: Externally added damping device

### DETAILED DESCRIPTION OF THE PREFERRED EMBODIMENTS

The present invention discloses that the input end of the bidirectional manpower input device is driven by both or one of the human hand or foot in the bidirectional positive or reverse rotating direction for transmission from the output end of the bidirectional manpower input device to the input end of the bidirectional speed change transmission device, and it is through the output end of the bidirectional different speed ratio speed change device to operate the bidirectional different speed ratio output for driving the loading wheel train, wherein the present invention is applied in foot pedal or hand swing vehicles, or both or one of the bidirectional rotating foot pedal and hand swing manual driven vehicles, or applied in the foot pedal or hand swing sports devices, or both or one of the bidirectional rotating foot pedal or hand swing manual driven sports devices, or applied in both or one of the foot pedal or hand swing driven devices such as fluid pump, fan or power generator. The present invention is especially applying as an upright bidirectional pedaling bicycle or as an upright bidirectional pedaling device for lower limbs bidirectional pedaling in order to widen the use of muscles and change the muscle strength and density, and obtain the following advantages:
(1) reducing injuries caused by overuse of partial muscles and joints;
(2) working the muscles and joints seldom being used or trained;

Above advantages can be applied at various bidirectional manpower driving using different muscle groups; especially when apply bidirectional pedaling driving at upright bicycles or upright pedaling exercise devices, the difference of the muscle groups using for bidirectional pedaling is bigger, that makes the said advantages and their effects more obvious.

The present invention discloses that the output end of a particular bidirectional manpower input device capable of receiving bidirectional rotating input is transmitted to the input end of the bidirectional different speed ratio speed change device, and it is through the output end of the bidirectional different speed ratio speed change device to operate the bidirectional different speed ratio output for driving the loading wheel train, wherein the user can freely decide the driving input direction to allow the bidirectional different speed ratio speed change device to provide the different rotating directional output at different speed change ratio while in different driving input direction.

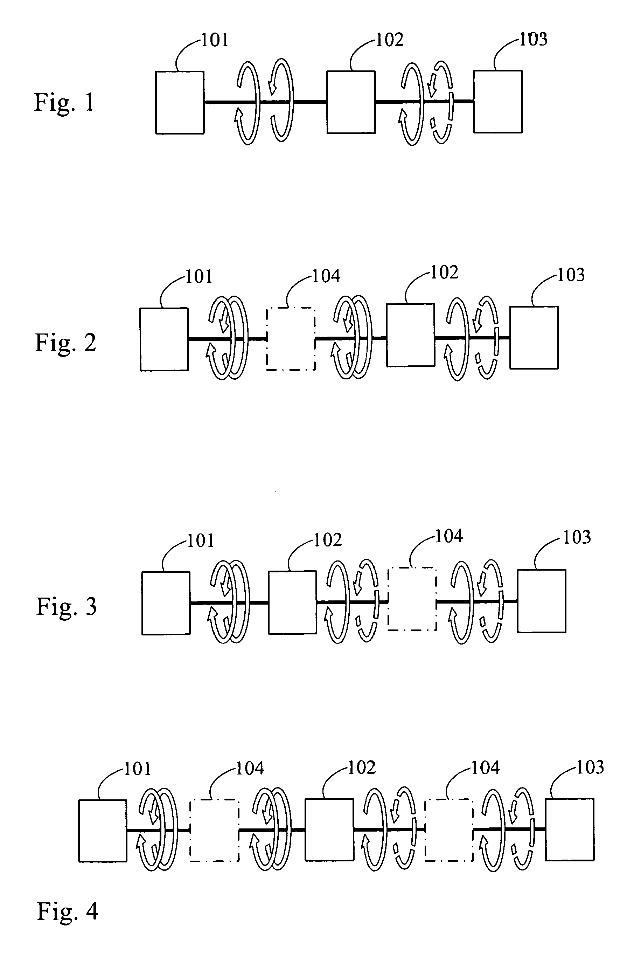

Fig. 1 is a block schematic view of basic structure of the bidirectional different speed ratio driving device with bidirectional manpower input of the present invention.
Fig. 2 is a block schematic view showing the driving device application example of Fig 1, wherein a transmission device(104) is additionally installed between the bidirectional manpower input device(101) and the bidirectional different speed ratio speed change device(102).
Fig. 3 is a block schematic view showing the driving device application example of Fig 1, wherein a transmission device(104) is additionally installed between the bidirectional different speed ratio speed change device(102) and the driven loading wheel train(103).
Fig. 4 is a block schematic view showing the driving device application example of Fig 1, wherein a transmission device(104) is respectively additionally installed between the bidirectional manpower input device(101) and the bidirectional different speed ratio speed change device(102) as well as between the bidirectional different speed ratio speed change device(102) and the driven loading wheel train(103).

The bidirectional different speed ratio driving device with bidirectional manpower input is through the manpower of both or one of the hand or foot to drive the bidirectional manpower input device(101) for rotating clockwise or counter-clockwise, wherein the rotating power output from the output end of bidirectional manpower input device(101) is transmitted to the input end of the bidirectional different speed ratio speed change device(102) directly or via a transmission device(104) for providing the bidirectional different speed ratio rotating power to drive the loading wheel train(103) as shown in Fig. 1∼4, wherein:
---- The bidirectional manpower input device(101) : It is constituted by the input mechanism capable of receiving the bidirectional positive or reverse rotating input or reciprocation driven by both or one of the hand or foot of human limbs, wherein its constitution comprises the pedals, crankshafts and the bidirectional rotating transmission wheel train, or comprises the handles, shafts, and the bidirectional rotating transmission wheel train, or comprises the conventional manpower driven bidirectional rotating mechanism;
---- The input powers of the first driving rotating direction and second driving rotating direction are from both or one of the hand or foot of the manpower for driving the input end of the bidirectional manpower input device(101);
---- The first driving rotating direction and second driving rotating direction are contrary to each other;
---- The bidirectional different speed ratio speed change device(102) : The bidirectional different speed ratio speed change device(102) receives the different directional rotating power from the bidirectional manpower input device(101) directly or via a transmission device(104) while provides the bidirectional different speed ratio power output; the bidirectional different speed ratio speed change device(102) is constituted by the internal transmission components of the following: 1) gear train; or 2) friction wheel train; or 3) chain and sprocket train; or 4) belt and pulley train; or 5) transmission crankshaft and wheel train; or 6) fluid transmission device; or 7) electromagnetic transmission device; or it is constituted by one or more than one of above said transmission components; when the bidirectional different speed ratio speed change device(102) is driven by the different rotating directional inputs of the first driving rotating direction and second driving rotating direction, the relative directional relationship at the bidirectional output end corresponding to the reversely different input direction at the input end can be the same or different , and the speed ratios between the output directions corresponding to different input directions are different;
---- The loading wheel train(103) : It is a wheel-type load driven by the output end of the bidirectional different speed ratio speed change device(102) directly or via the wheel load of a transmission device(104);

The bidirectional different speed ratio driving device with bidirectional manpower input is applied in the bidirectional carriers driven by both or one of the human hand or foot of the manpower, wherein the bidirectional rotating power output at the output end of the bidirectional manpower input device(101) which is driven in positive or reverse rotating direction by both or one of the human hand or foot of manpower allows at least one bidirectional different speed ratio speed change device(102) to provide bidirectional different speed ratio rotating output directly or via a transmission device(104), while the output rotating power is used to drive the loading wheel train(103) directly or via a transmission device(104); the bidirectional manpower input device(101) is driven by both or one of the human hand or foot in positive or reverse rotation to provide relative rotating directional output at a selected speed ratio;
---- The transmission device(104): The transmission device(104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device.

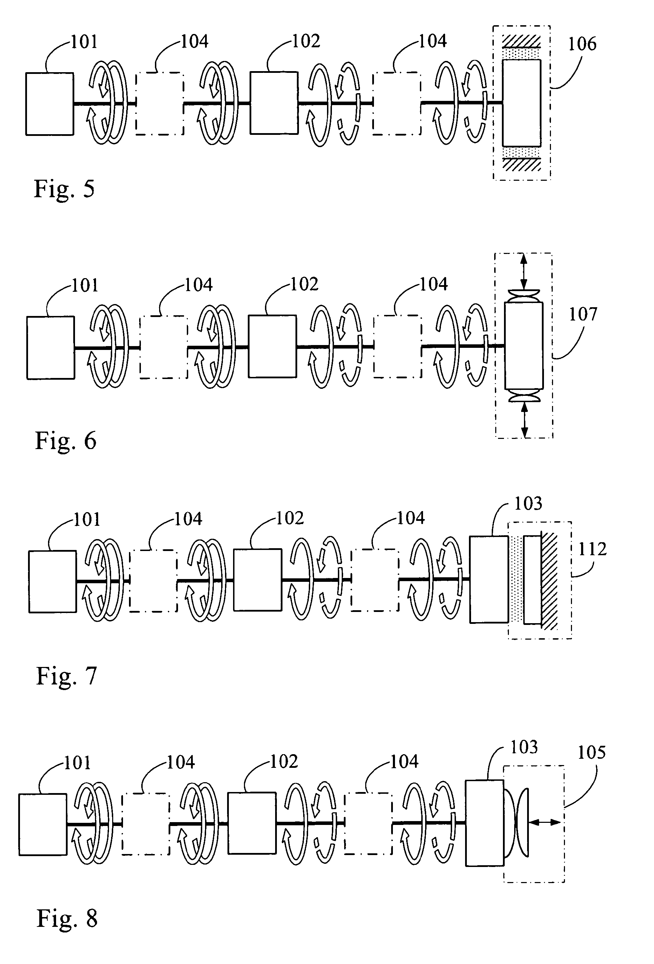

The bidirectional different speed ratio driving device with bidirectional manpower input is further applied in the manpower driven sports device such as the exercise bicycles as shown in Fig. 5 which is a block schematic view of the application example showing that the present invention is applied in the manpower driven sports device having the fixed damped loading wheel train, wherein it comprises a bidirectional manpower input device(101) being driven by both or one of the hand and foot of manpower in positive or reverse rotation, and the output rotating power from the bidirectional manpower input device(101) is directly transmitted to the input end of at least one bidirectional different speed ratio speed change device(102) directly or via a transmission device(104), and it is further through the output end of the bidirectional different speed ratio speed change device(102) to provide bidirectional different speed ratio rotating power output for driving the damped loading wheel train(106) directly or via a transmission device(104), wherein the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
wherein the damped loading wheel train(106) has its own fixed damping to produce damping in the sports device function operations;

The self-installed damping of aforesaid damped loading wheel train(106) includes the damping structures such as the friction damping type, or fluid damping type, or counter-rotating torque damping of power generation type, or electric counter-rotating torque type, or electromagnetic eddy current generation damping type structures.

The bidirectional different speed ratio driving device with bidirectional manpower input is further applied in the manpower driven sports device installed with operatively controllable damping device such as the exercise bicycles as shown in Fig. 6 which is a block schematic view of the application example showing that the present invention is applied in the manpower driven sports device having the operatively controllable damped loading wheel train, wherein it comprises a bidirectional manpower input device(101) being driven by both or one of the hand and foot of manpower in positive or reverse rotation, and the output rotating power from the bidirectional manpower input device(101) is transmitted to the input end of at least one bidirectional different speed ratio speed change device(102) directly or via a transmission device(104), and it is further through the output end of the bidirectional different speed ratio speed change device(102) to provide bidirectional different speed ratio rotating power output for driving the operatively controllable damped loading wheel train (107) directly or via a transmission device(104), wherein the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
wherein the operatively controllable damped loading wheel train (107) has its own operatively controllable damping to produce operatively controllable damping in sports device function operations;

The operatively controllable damping produced by aforesaid operatively controllable damped loading wheel train (107) includes the operatively controllable damping structures such as the friction damping type, or fluid damping type, or counter-rotating torque damping of power generation type, or electric counter-rotating torque type, or electromagnetic eddy current generation damping type structures so as to operatively control the damping value produced by the operatively controllable damped loading wheel train (107);

The operative control method of aforesaid operatively controllable damped loading wheel train (107) is based on the type of damping structure selected for operatively controlling the operatively controllable damped loading wheel train (107) so as to produce the operative controllable damping function via the fluid power, or mechanical power, or electric power operative control method and device.

The manpower driven carrier of the bidirectional different speed ratio driving device with bidirectional manpower input is further installed with the externally added damping device(112) to produce damping effect together with the loading wheel train(103) thereby been transformed to have the sports device function for use as shown in Fig. 7 which is a block schematic view of the application example showing that the present invention is applied in the manpower driven carriers by additionally installing the fixed damping device to produce damping thereby constituting the sports device function, wherein it comprises a bidirectional manpower input device(101) being driven by both or one of the hand and foot of manpower in positive or reverse rotation and at least one bidirectional different speed ratio speed change device(102), and the output rotating power from the bidirectional manpower input device(101) is transmitted to the input end of at least one bidirectional different speed ratio speed change device(102) directly or via a transmission device(104), and it is further through the output end of the bidirectional different speed ratio speed change device(102) to provide bidirectional different speed ratio rotating power output for driving the loading wheel train(103) directly or via a transmission device(104), wherein the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
wherein the loading wheel train(103) is installed with at least one externally added damping device(112) to produce damping in the sports device function operations;

The damping structure of aforesaid externally added damping device(112) being additionally installed to the loading wheel train(103) for producing the damping effect includes the operatively controllable damping structures such as the friction damping type, or fluid damping type, or counter-rotating torque damping of power generation type, or electric counter-rotating torque type, or electromagnetic eddy current generation damping type structures.

The manpower driven carrier of the bidirectional different speed ratio driving device with bidirectional manpower input is further installed with externally added operatively controllable damping device(105) for being transformed to use as sports device function as shown in Fig. 8 which is a block schematic view of the application example showing that the present invention is applied in the manpower driven carriers by installing the externally added operatively controllable damping device(105) to constitute the sports device function, wherein it comprises a bidirectional manpower input device(101) being driven by both or one of the hand and foot of manpower in positive or reverse rotation and at least one bidirectional different speed ratio speed change device(102), and the output rotating power from the bidirectional manpower input device(101) is transmitted to the input end of at least one bidirectional different speed ratio speed change device(102) directly or via a transmission device(104), and it is further through the output end of the bidirectional different speed ratio speed change device(102) to provide bidirectional different speed ratio rotating power output for driving the loading wheel train(103) directly or via a transmission device(104), wherein the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
wherein the loading wheel train(103) is installed with at least one externally added operatively controllable damping device(105) for producing and operatively control the damping in the sports device function operations;

The damping structure of aforesaid externally added operatively controllable damping device(105) includes the operatively controllable damping structures such as the friction damping type, or fluid damping type, or counter-rotating torque damping of power generation type, or electric counter-rotating torque type, or electromagnetic eddy current generation damping type structures, wherein the externally added operatively controllable damping device(105) is based on the type of damping structure selected for operatively controlling the damping value in the sports device function operations via the fluid power, or mechanical power, or electric power operative control method and device.

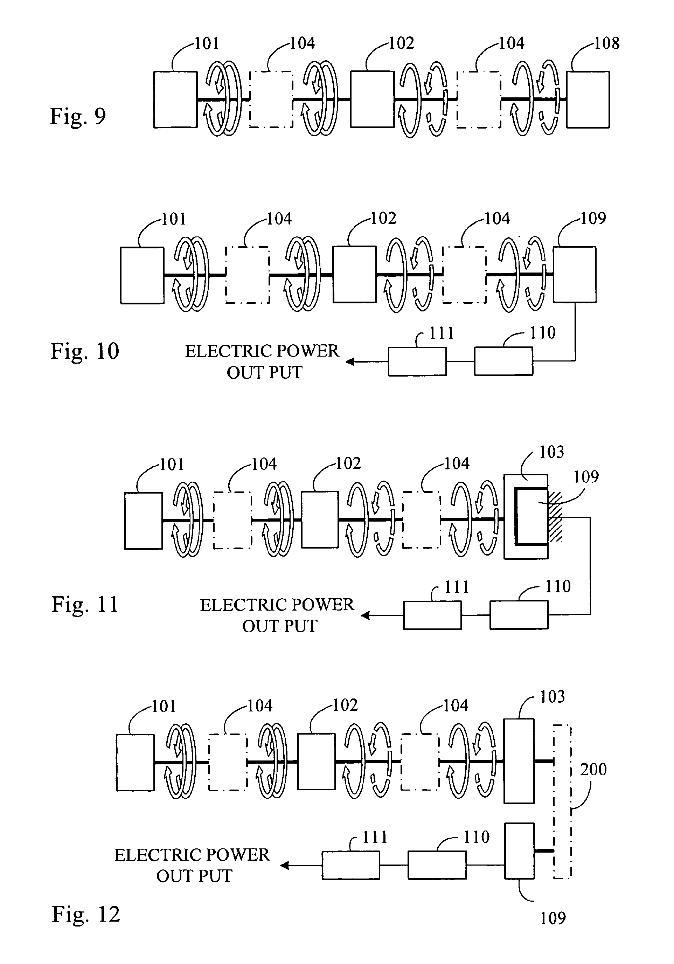

For the bidirectional different speed ratio driving device with bidirectional manpower input, the input end of the bidirectional manpower input device(101) is driven by the manpower to receive positive or reverse rotating power input, while the output rotating power from the output end of the bidirectional manpower input device(101) is transmitted to the input end of the bidirectional different speed ratio speed change device(102) and it is further through the output end of the bidirectional different speed ratio speed change device(102) to provide constant rotating directional mechanical power output for driving the mechanical functioning device in constant rotating direction as shown in Fig. 9 which is a block schematic view of the application example showing that the bidirectional different speed change ratio rotating type mechanical functioning device is driven by the present invention, wherein it comprises a bidirectional manpower input device(101) being driven by both or one of the hand and foot of manpower in positive or reverse rotation, and the output rotating power from the output end of the bidirectional manpower input device(101) is transmitted to the input end of the bidirectional different speed ratio speed change device(102) directly or via a transmission device(104), and it is further through the output end of the bidirectional different speed ratio speed change device(102) to provide bidirectional different speed ratio rotating power output for driving the rotating type mechanical functioning device(108) directly or via a transmission device(104), wherein the rotating type mechanical functioning device(108) includes the fluid pump, or the fan, or the inertia energy storing flywheel, or other manpower driven rotating type mechanical functioning device, and the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device.

For the bidirectional different speed ratio driving device with bidirectional manpower input, the input end of the bidirectional manpower input device(101) is driven by the manpower to receive positive or reverse rotating power input, while the output rotating power from the output end of the bidirectional manpower input device(101) is transmitted to the input end of the bidirectional different speed ratio speed change device(102), and it is further through the output end of the bidirectional different speed ratio speed change device(102) to provide bidirectional different speed ratio rotating directional output for driving the power generator(109) as shown in Fig. 10 which is a block schematic view of the present invention showing the application example for driving the power generator, wherein it comprises a bidirectional manpower input device(101) being driven by both or one of the hand and foot of manpower in positive or reverse rotation, and the output rotating power from the output end of the bidirectional manpower input device(101) is transmitted to the input end of the bidirectional different speed ratio speed change device(102) directly or via a transmission device(104), and it is further through the output end of the bidirectional different speed ratio speed change device(102) to provide bidirectional different speed ratio rotating power output for driving the rotating type power generator(109) directly or via a transmission device(104), wherein the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
wherein the power generator(109) is further optionally installed with the power generator related operative control device(110) and the circuit switch or protecting device(111).

For the bidirectional different speed ratio driving device with bidirectional manpower input, the loading wheel train(103) and the power generator(109) are combined in an integral structure in the application of driving power generator(109) as shown in Fig. 11 which is a block schematic view of the application example showing that the loading wheel train(103) and the power generator(109) driven by the present invention are combined in an integral structure, wherein it comprises a bidirectional manpower input device(101) being driven by both or one of the hand and foot of manpower in positive or reverse rotation, and the output rotating power from the bidirectional manpower input device(101) is transmitted to the input end of the bidirectional different speed ratio speed change device(102) directly or via a transmission device(104), and it is further through the output end of the bidirectional different speed ratio speed change device(102) to provide bidirectional different speed ratio rotating power output for driving the power generator(109), wherein the power generator(109) and the loading wheel train(103) are integrally combined, or the power generator(109) is directly constituted by the loading wheel train(103) to be part of the power generator structure, wherein the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
wherein the power generator(109) is further optionally installed with the power generator(109) related operative control device(110) and the circuit switch or protecting device(111).

For the bidirectional different speed ratio driving device with bidirectional manpower input being used as the manpower carrier is optionally installed with the power generator(109) driven by the loading wheel train(103) directly or via the transmission device(200) as shown in Fig. 12 which is a block schematic view of the application example showing that the loading wheel train(103) of the manpower driven carrier of the present invention is matchingly installed with a power generator (109); wherein it comprises a bidirectional manpower input device(101) being driven by both or one of the hand and foot of manpower in positive or reverse rotation, and the output rotating power from the bidirectional manpower input device(101) is transmitted to the input end of the bidirectional different speed ratio speed change device(102) directly or via a transmission device(104), and it is further through the output end of the bidirectional different speed ratio speed change device(102) to provide bidirectional different speed ratio rotating power output for driving the power generator(109) via the loading wheel train(103), wherein the power generator is externally installed to be driven by the loading wheel train(103); the transmission device(104, 200) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
the power generator(109) is further optionally installed with the power generator related operative control device(110) and the circuit switch or protecting device(111).

The relevant operating function display device, or operator's physiological status detecting device, or display device is optionally installed according to driven loading characteristics on the said bidirectional manpower driven carrier, bidirectional manpower driven sports device, bidirectional manpower driven rotating type mechanical functioning device, or bidirectional manpower driven power generator of the bidirectional different speed ratio driving device with bidirectional manpower input.

In practical applications, the relevant devices of aforesaid bidirectional different speed ratio driving
device with bidirectional manpower input are individually independently installed and further transmissionly connected, or two or more than two relevant devices of them are integrally combined.

## Claims

1. A bidirectional different speed ratio driving device with bidirectional manpower input of the present invention discloses that the output end of a particular bidirectional manpower input device capable of receiving bidirectional rotating input is transmitted to the input end of the bidirectional different speed ratio speed change device, and it is through the output end of the bidirectional different speed ratio speed change device to operate the bidirectional different speed ratio output for driving the loading wheel train, wherein the user can freely decide the driving input direction to allow the bidirectional different speed ratio speed change device to provide the different rotating directional output at different speed change ratio while in different driving input direction;
The bidirectional different speed ratio driving device with bidirectional manpower input is through the manpower of both or one of the hand or foot to drive the bidirectional manpower input device(101) for rotating clockwise or counter-clockwise, wherein the rotating power output from the output end of bidirectional manpower input device(101) is transmitted to the input end of the bidirectional different speed ratio speed change device(102) directly or via a transmission device(104) for providing the bidirectional different speed ratio rotating power to drive the loading wheel train(103), wherein:
---- The bidirectional manpower input device(101): It is constituted by the input mechanism capable of receiving the bidirectional positive or reverse rotating input or reciprocation driven by both or one of the hand or foot of human limbs, wherein its constitution comprises the pedals, crankshafts and the bidirectional rotating transmission wheel train, or comprises the handles, shafts, and the bidirectional rotating transmission wheel train, or comprises the conventional manpower driven bidirectional rotating mechanism;
---- The input powers of the first driving rotating direction and second driving rotating direction are from both or one of the hand or foot of the manpower for driving the input end of the bidirectional manpower input device(101);
---- The first driving rotating direction and second driving rotating direction are contrary to each other;
---- The bidirectional different speed ratio speed change device(102) : The bidirectional different speed ratio speed change device(102) receives the different directional rotating power from the bidirectional manpower input device(101) directly or via a transmission device(104) while provides the bidirectional different speed ratio power output; the bidirectional different speed ratio speed change device(102) is constituted by the internal transmission components of the following: 1) gear train; or 2) friction wheel train; or 3) chain and sprocket train; or 4) belt and pulley train; or 5) transmission crankshaft and wheel train; or 6) fluid transmission device; or 7) electromagnetic transmission device; or it is constituted by one or more than one of above said transmission components; when the bidirectional different speed ratio speed change device(102) is driven by the different rotating directional inputs of the first driving rotating direction and second driving rotating direction, the relative directional relationship at the bidirectional output end corresponding to the reversely different input direction at the input end can be the same or different , and the speed ratios between the output directions corresponding to different input directions are different;
---- The loading wheel train(103): It is a wheel-type load driven by the output end of the bidirectional different speed ratio speed change device(102) directly or via the wheel load of a transmission device(104);
The present invention is especially applying as an upright bidirectional pedaling bicycle or as an upright bidirectional pedaling device for lower limbs bidirectional pedaling in order to widen the use of muscles and change the muscle strength and density, and obtain the following advantages:
(1)reducing injuries caused by overuse of partial muscles and joints;
(2)working the muscles and joints seldom being used or trained;
Above advantages can be applied at various bidirectional manpower driving using different muscle groups; especially when apply bidirectional pedaling driving at upright bicycles or upright pedaling exercise devices, the difference of the muscle groups using for bidirectional pedaling is bigger, that makes the said advantages and their effects more obvious.

2. A bidirectional different speed ratio driving device with bidirectional manpower input as claimed in claim 1 is applied in the bidirectional carriers driven by both or one of the human hand or foot of the manpower, wherein the bidirectional rotating power output at the output end of the bidirectional manpower input device(101) which is driven in positive or reverse rotating direction by both or one of the human hand or foot of manpower allows at least one bidirectional different speed ratio speed change device(102) to provide bidirectional different speed ratio rotating output directly or via a transmission device(104), while the output rotating power is used to drive the loading wheel train(103) directly or via a transmission device(104); the bidirectional manpower input device(101) is driven by both or one of the human hand or foot in positive or reverse rotation to provide relative rotating directional output at a selected speed ratio;
---- The transmission device(104): The transmission device(104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device.

3. A bidirectional different speed ratio driving device with bidirectional manpower input as claimed in claim 1 is further applied in the manpower driven sports device such as the exercise bicycles, wherein it comprises a bidirectional manpower input device(101) being driven by both or one of the hand and foot of manpower in positive or reverse rotation, and the output rotating power from the bidirectional manpower input device(101) is directly transmitted to the input end of at least one bidirectional different speed ratio speed change device(102) directly or via a transmission device(104), and it is further through the output end of the bidirectional different speed ratio speed change device(102) to provide bidirectional different speed ratio rotating power output for driving the damped loading wheel train(106) directly or via a transmission device(104), wherein the transmission device (104) is constituted by one or more than one transmission devices of the following: 1) various gear-type, belt-type, friction-type fixed speed ratio or variable-speed ratio rotating type transmission functioning structure, 2) or a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
wherein the damped loading wheel train(106) has its own fixed damping to produce damping in the sports device function operations;
The self-installed damping of aforesaid damped loading wheel train(106) includes the damping structures such as the friction damping type, or fluid damping type, or counter-rotating torque damping of power generation type, or electric counter-rotating torque type, or electromagnetic eddy current generation damping type structures.

4. A bidirectional different speed ratio driving device with bidirectional manpower input as claimed in claim 1 is further applied in the manpower driven sports device installed with operatively controllable damping device such as the exercise bicycles, wherein it comprises a bidirectional manpower input device(101) being driven by both or one of the hand and foot of manpower in positive or reverse rotation, and the output rotating power from the bidirectional manpower input device(101) is transmitted to the input end of at least one bidirectional different speed ratio speed change device(102) directly or via a transmission device(104), and it is further through the output end of the bidirectional different speed ratio speed change device(102) to provide bidirectional different speed ratio rotating power output for driving the operatively controllable damped loading wheel train (107) directly or via a transmission device(104), wherein the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
wherein the operatively controllable damped loading wheel train (107) has its own operatively controllable damping to produce operatively controllable damping in sports device function operations;
The operatively controllable damping produced by aforesaid operatively controllable damped loading wheel train (107) includes the operatively controllable damping structures such as the friction damping type, or fluid damping type, or counter-rotating torque damping of power generation type, or electric counter-rotating torque type, or electromagnetic eddy current generation damping type structures so as to operatively control the damping value produced by the operatively controllable damped loading wheel train (107);
The operative control method of aforesaid operatively controllable damped loading wheel train (107) is based on the type of damping structure selected for operatively controlling the operatively controllable damped loading wheel train (107) so as to produce the operative controllable damping function via the fluid power, or mechanical power, or electric power operative control method and device.

5. A bidirectional different speed ratio driving device with bidirectional manpower input as claimed in claim 1 is further installed with the externally added damping device(112) to produce damping effect together with the loading wheel train(103) thereby been transformed to have the sports device function for use; wherein it comprises a bidirectional manpower input device(101) being driven by both or one of the hand and foot of manpower in positive or reverse rotation and at least one bidirectional different speed ratio speed change device(102), and the output rotating power from the bidirectional manpower input device(101) is transmitted to the input end of at least one bidirectional different speed ratio speed change device(102) directly or via a transmission device(104), and it is further through the output end of the bidirectional different speed ratio speed change device(102) to provide bidirectional different speed ratio rotating power output for driving the loading wheel train(103) directly or via a transmission device(104), wherein the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
wherein the loading wheel train(103) is installed with at least one externally added damping device(112) to produce damping in the sports device function operations;
The damping structure of aforesaid externally added damping device(112) being additionally installed to the loading wheel train(103) for producing the damping effect includes the operatively controllable damping structures such as the friction damping type, or fluid damping type, or counter-rotating torque damping of power generation type, or electric counter-rotating torque type, or electromagnetic eddy current generation damping type structures.

6. A bidirectional different speed ratio driving device with bidirectional manpower input as claimed in claim 1 is further installed with externally added operatively controllable damping device(105) for being transformed to use as sports device function, wherein it comprises a bidirectional manpower input device(101) being driven by both or one of the hand and foot of manpower in positive or reverse rotation and at least one bidirectional different speed ratio speed change device(102), and the output rotating power from the bidirectional manpower input device(101) is transmitted to the input end of at least one bidirectional different speed ratio speed change device(102) directly or via a transmission device(104), and it is further through the output end of the bidirectional different speed ratio speed change device(102) to provide bidirectional different speed ratio rotating power output for driving the loading wheel train(103) directly or via a transmission device(104), wherein the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
wherein the loading wheel train(103) is installed with at least one externally added operatively controllable damping device(105) for producing and operatively control the damping in the sports device function operations;
The damping structure of aforesaid externally added operatively controllable damping device(105) includes the operatively controllable damping structures such as the friction damping type, or fluid damping type, or counter-rotating torque damping of power generation type, or electric counter-rotating torque type, or electromagnetic eddy current generation damping type structures, wherein the externally added operatively controllable damping device(105) is based on the type of damping structure selected for operatively controlling the damping value in the sports device function operations via the fluid power, or mechanical power, or electric power operative control method and device.

7. A bidirectional different speed ratio driving device with bidirectional manpower input as claimed in claim 1, the input end of the bidirectional manpower input device(101) is driven by the manpower to receive positive or reverse rotating power input, while the output rotating power from the output end of the bidirectional manpower input device(101) is transmitted to the input end of the bidirectional different speed ratio speed change device(102) and it is further through the output end of the bidirectional different speed ratio speed change device(102) to provide constant rotating directional mechanical power output for driving the mechanical functioning device in constant rotating direction, wherein it comprises a bidirectional manpower input device(101) being driven by both or one of the hand and foot of manpower in positive or reverse rotation, and the output rotating power from the output end of the bidirectional manpower input device(101) is transmitted to the input end of the bidirectional different speed ratio speed change device(102) directly or via a transmission device(104), and it is further through the output end of the bidirectional different speed ratio speed change device(102) to provide bidirectional different speed ratio rotating power output for driving the rotating type mechanical functioning device(108) directly or via a transmission device(104), wherein the rotating type mechanical functioning device(108) includes the fluid pump, or the fan, or the inertia energy storing flywheel, or other manpower driven rotating type mechanical functioning device, and the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device.

8. A bidirectional different speed ratio driving device with bidirectional manpower input as claimed in claim 1, the input end of the bidirectional manpower input device(101) is driven by the manpower to receive positive or reverse rotating power input, while the output rotating power from the output end of the bidirectional manpower input device(101) is transmitted to the input end of the bidirectional different speed ratio speed change device(102), and it is further through the output end of the bidirectional different speed ratio speed change device(102) to provide bidirectional different speed ratio rotating directional output for driving the power generator(109), wherein it comprises a bidirectional manpower input device(101) being driven by both or one of the hand and foot of manpower in positive or reverse rotation, and the output rotating power from the output end of the bidirectional manpower input device(101) is transmitted to the input end of the bidirectional different speed ratio speed change device(102) directly or via a transmission device(104), and it is further through the output end of the bidirectional different speed ratio speed change device(102) to provide bidirectional different speed ratio rotating power output for driving the rotating type power generator(109) directly or via a transmission device(104), wherein the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
wherein the power generator(109) is further optionally installed with the power generator related operative control device(110) and the circuit switch or protecting device(111).

9. A bidirectional different speed ratio driving device with bidirectional manpower input as claimed in claim 1, the loading wheel train(103) and the power generator(109) are combined in an integral structure in the application of driving power generator(109), wherein it comprises a bidirectional manpower input device(101) being driven by both or one of the hand and foot of manpower in positive or reverse rotation, and the output rotating power from the bidirectional manpower input device(101) is transmitted to the input end of the bidirectional different speed ratio speed change device(102) directly or via a transmission device(104), and it is further through the output end of the bidirectional different speed ratio speed change device(102) to provide bidirectional different speed ratio rotating power output for driving the power generator(109), wherein the power generator(109) and the loading wheel train(103) are integrally combined, or the power generator(109) is directly constituted by the loading wheel train(103) to be part of the power generator structure, wherein the transmission device (104) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device;
wherein the power generator(109) is further optionally installed with the power generator(109) related operative control device(110) and the circuit switch or protecting device(111).

10. A bidirectional different speed ratio driving device with bidirectional manpower input as claimed in claim 1, the bidirectional different speed ratio driving device with bidirectional manpower input being used as the manpower carrier is optionally installed with the power generator(109) driven by the loading wheel train(103) directly or via the transmission device(200); wherein it comprises a bidirectional manpower input device(101) being driven by both or one of the hand and foot of manpower in positive or reverse rotation, and the output rotating power from the bidirectional manpower input device(101) is transmitted to the input end of the bidirectional different speed ratio speed change device(102) directly or via a transmission device(104), and it is further through the output end of the bidirectional different speed ratio speed change device(102) to provide bidirectional different speed ratio rotating power output for driving the power generator(109) via the loading wheel train(103), wherein the power generator is externally installed to be driven by the loading wheel train(103); the transmission device(104, 200) is constituted by one or more than one transmission devices of the following: 1) various gear-type, belt-type, friction-type fixed speed ratio or variable-speed ratio rotating type transmission functioning structure, or 2) a stepped or stepless variable speed device being operated manually, or by the mechanical force, or fluid force, or centrifugal force, or rotating torque or counter-rotating torque, or 3) the transmission device of the capability to operatively control the switching relationship of the relative rotating directions at the input end and output end, or 4) the clutch device or the single way clutch being operated manually, or by the mechanical force, or electromagnetic force, or fluid force, or centrifugal force, or rotating torque, or counter-rotating torque for connecting transmission or interrupting transmission clutch functioning device; the power generator(109) is further optionally installed with the power generator related operative control device(110) and the circuit switch or protecting device(111).

11. A bidirectional different speed ratio driving device with bidirectional manpower input as claimed in claim 1, the relevant operating function display device, or operator's physiological status detecting device, or display device is optionally installed according to driven loading characteristics on the said bidirectional manpower driven carrier, bidirectional manpower driven sports device, bidirectional manpower driven rotating type mechanical functioning device, or bidirectional manpower driven power generator of the bidirectional different speed ratio driving device with bidirectional manpower input.

12. A bidirectional different speed ratio driving device with bidirectional manpower input as claimed in claim 1 is applied in foot pedal or hand swing vehicles, or both or one of the bidirectional rotating foot pedal and hand swing manual driven vehicles, or applied in the foot pedal or hand swing sports devices, or both or one of the bidirectional rotating foot pedal or hand swing manual driven sports devices, or applied in both or one of the foot pedal or hand swing driven devices such as fluid pump, or fan or power generator.

13. A bidirectional different speed ratio driving device with bidirectional manpower input as claimed in claim 1, in practical applications, the relevant devices of aforesaid bidirectional different speed ratio driving device with bidirectional manpower input are individually independently installed and further transmissionly connected, or two or more than two relevant devices of them are integrally combined; The present invention is especially applying as an upright bidirectional pedaling bicycle or as an upright bidirectional pedaling device for lower limbs bidirectional pedaling in order to widen the use of muscles and change the muscle strength and density, and obtain the following advantages:
(1)reducing injuries caused by overuse of partial muscles and joints;
(2)working the muscles and joints seldom being used or trained;
Above advantages can be applied at various bidirectional manpower driving using different muscle groups; especially when apply bidirectional pedaling driving at upright bicycles or upright pedaling exercise devices, the difference of the muscle groups using for bidirectional pedaling is bigger, that makes the said advantages and their effects more obvious.

14. A bidirectional, variable speed ratio driving device comprising:
---- a manpower input device (101), drivable in a forward or reverse direction;
---- a speed change device (102), having an input end and an output end, the input end being arranged to receive rotational energy from the manpower input device (101); and
---- a load wheel train (103) drivable by rotational energy output from the output end of the speed change device (102).

15. A driving device according to claim 14, further comprising:
---- a first transmission device (104) connected between the manpower input device (101) and the speed change device (102);
---- wherein the load wheel train (103) is rotatable in a forward or reverse direction, at a variable speed ratio.

## Amended claims

### Amended claims in accordance with Rule 137(2) EPC.

**1.** A bidirectional, variable speed ratio driving device comprising:
a manpower input device (101), drivable in a forward or reverse direction;
a speed change device (102), having an input end and an output end, the input end being arranged to receive rotational energy from the manpower input device (101); and
a load wheel train (103) drivable by rotational energy output from the output end of the speed change device (102);
wherein, when the manpower input device (101) is driven in said forward or said reverse direction, the rotational direction of the output from the speed change device may be the same as, or different to, the rotational direction of the input; and
wherein the speed ratio of the output is different to the speed ratio of the input.

**2.** A driving device according to claim 1, further comprising:
a first transmission device (104) connected between the manpower input device (101) and the speed change device (102);
wherein the load wheel train (103) is rotatable in a forward or reverse direction, at a variable speed ratio.

**3.** A driving device according to claim 2, further comprising:
a second transmission device (104) connected between the speed change device (102) and the load wheel train (103).

**4.** A driving device according to claim 1, further comprising:
a first transmission device (104) connected between the speed change device (102) and the load wheel train (103) ;
wherein the load wheel train (103) is rotatable in a forward or reverse direction, at a variable speed ratio.

**5.** A driving device according to claim 4, further comprising:
a second transmission device (104) connected between the manpower input device (101) and the speed change device (102).

**6.** A driving device according to any one of the preceding claims, wherein the manpower input device (101) comprises pedals, a crankshaft and a bidirectional rotating transmission wheel train.

**7.** A driving device according to any one of claims 1 to 5, wherein the manpower input device (101) comprises handles, shafts and a bidirectional rotating transmission wheel train.

**8.** A driving device according to any one of the preceding claims, wherein the speed change device (102) comprises at least one device selected from the group of: a gear train; a friction wheel train; a chain and sprocket train; a belt and pulley train; a transmission crankshaft and wheel train; a fluid transmission device; and an electromagnetic transmission device.

**9.** A driving device according to any one of claims 2 to 8, wherein the or each transmission device (104) comprises at least one device selected from the group of: a gear-type transmission device; a belt-type transmission device; a friction-type fixed speed ratio transmission device; a friction-type variable-speed ratio transmission device; a stepped variable speed transmission device operable manually, or by a mechanical force, a fluid force, a centrifugal force, a rotating torque or a counter-rotating torque; a stepless variable-speed transmission device operable manually, or by a mechanical force, a fluid force, a centrifugal force, a rotating torque or a counter-rotating torque; a transmission device having a capability to operatively control the relative rotational directions at the input end and the output end of the speed change device (102); and a clutch device operable manually, or by a mechanical force, an electromagnetic force, a fluid force, a centrifugal force, a single way clutch, a rotating torque or a counter-rotating torque, for connecting or interrupting transmission.

**10.** A driving device according to any one of the preceding claims, wherein the load wheel train (103) comprises a damped load wheel train (106), for producing damping in the load wheel train.

**11.** A driving device according to any one of claims 1 to 9, wherein the load wheel train (103) comprises an operatively controllable damped load wheel train (107) for producing operatively controllable damping in the load wheel train.

**12.** A driving device according to any one of claims 1 to 9, further comprising an external damping device (112) for producing damping in the load wheel train.

**13.** A driving device according to any one of claims 1 to 9, further comprising an external operatively controllable damping device (105) for producing operatively controllable damping in the load wheel train.

**14.** A driving device according to any one of claims 10 to 13, wherein, when dependent on claims 10 or 11, the load wheel train (106, 107) comprises a damping structure, and when dependent on claims 12 or 13, the external damping device (112, 105) comprises a damping structure;
wherein the damping structure is of a type selected from the group of: a friction damping structure; a fluid damping structure, a counter-rotating torque damping structure of the power generation type; an electric counter-rotating torque damping structure, and an electromagnetic eddy current generation damping structure.

**15.** A driving device according to any one of claims 1 to 9, wherein the load wheel train (103) comprises a rotating-type mechanical functioning device (108), the mechanical functioning device (108) comprising a device selected from the group of: a fluid pump; a fan; and inertia energy storing flywheel; and a manpower driven rotating type mechanical functioning device.
